Europäisches Patentamt

European Patent Office

Office européen des brevets

(11) Publication number: **0 009 224**
B1

# EUROPEAN PATENT SPECIFICATION

(45) Date of publication of patent specification: **13.06.84**

(51) Int. Cl.³: **F 16 D 3/30, F 16 D 3/34**

(21) Application number: **79103455.6**

(22) Date of filing: **14.09.79**

(54) Tripod type constant velocity universal joint.

(30) Priority: **14.09.78 JP 113122/78**

(43) Date of publication of application:
**02.04.80 Bulletin 80/7**

(45) Publication of the grant of the patent
**13.06.84 Bulletin 84/24**

(84) Designated Contracting States:
**DE FR GB**

(56) References cited:
**DE - A - 2 007 016**
**DE - A - 2 027 426**
**DE - A - 2 235 115**
**DE - B - 2 728 518**
**DE - U - 1 888 833**
**US - A - 3 990 267**

**Society of Automotive Engineers Technical
Paper Series No. 78098(Fig.23)**

(73) Proprietor: **TOYOTA JIDOSHA KABUSHIKI
KAISHA
1, Toyota-cho Toyota-shi
Aichi-ken 471 (JP)**

(73) Proprietor: **KABUSHIKI KAISHA TOYOTA CHUO
KENKYUSHO
41-1, Aza Yokomichi Oaza Nagakute Nagakute-
cho
Aichi-gun Aichi-ken, 480-11 (JP)**

(72) Inventor: **Futamura, Yoshisumi
1, 9-chome, Maruyama-cho
Toyota-shi Aichi-ken (JP)**
Inventor: **Komeiji, Shigeki
25-7, 1-chome, Aoki-cho
Toyota-shi Aichi-ken (JP)**
Inventor: **Noro, Shuhei
13-14, 3-chome Wagogaoka, Togo-cho
Aichi-gun, Aichi-ken (JP)**
Inventor: **Hasegawa, Junzo
47-254, Aza Chaya, Kyowa-cho
Obu-shi Aichi-ken (JP)**
Inventor: **Matsunari, Fumio 769-1, Aza Uedamae
Oaza Shimada, Tempaku-cho Tempaku-ku
Nagoya-shi Aichi-ken (JP)**
Inventor: **Ikeda, Toshiaki
3415, Oaza Haruki, Togo-cho
Aichi-gun Aichi-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 009 224**

(74) Representative: **Blumbach Weser Bergen Kramer
Zwirner Hoffmann Patentanwälte
Radeckestrasse 43
D-8000 München 60 (DE)**

# 0 009 224

## Description

This invention relates to a constant velocity universal joint for transmitting a rotary motion between a driving shaft and a driven shaft, without changing the angular velocity thereof, and more particularly to a tripod type constant velocity universal joint comprising a spider member for connection to a driving shaft or a driven shaft, having three roller-supporting rods extending radially from a centre portion thereof with angles of 120 degree therebetween, three roller elements respectively rotatably supported on respective ones of the said roller supporting rods and slidable therealong, and a pot member for connection to the other of said driving and driven shafts, defining three pairs of roller raceways receiving each of the three roller elements between the respective pairs of roller raceways.

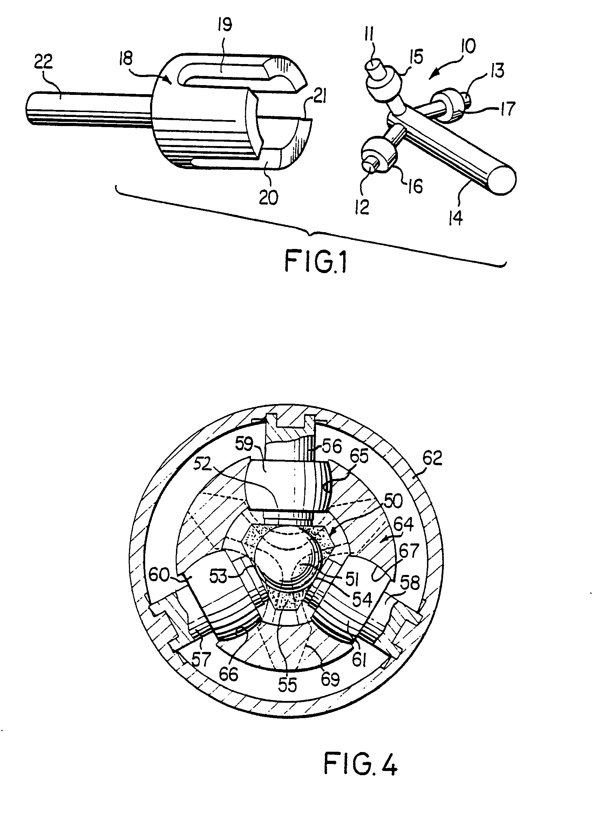

If, in a tripod type constant velocity universal joint of the above-indicated kind, only the constant velocity characteristic is taken into consideration, it is preferable for the pairs of roller raceways to extend parallel to the rotational axis of the pot member. However, in order to reduce the size and weight of the universal joint it is not always preferable for the roller raceways to be parallel to the rotational axis of the pot member. In a previously known tripod type constant velocity universal joint which is in practical use, in order to reduce the size and weight thereof, the top end portions of the roller raceways are slightly bent toward the rotational axis of the pot member, that is, they are subjected to what is often called a 'unilateral or single-ended modification' (US—A 3 990 267, Fig. 1; Society of Automotive Engineers Technical Paper series Nr. 780098, Fig. 23). This tripod type constant velocity joint having its roller raceways subjected to single-ended modification is small in size and light in weight when compared with a tripod type constant velocity universal joint in which the roller raceways are not so modified. However, the former universal joint suffers from a disadvantage that its constant velocity characteristic is reduced.

The quantity of non-constant velocity in rotation of a tripod type universal joint is determined by adding two values obtained by multiplying each difference in the pitch radii of the portions at which two adjacent roller elements are respectively located between pairs of roller raceways, by each value represented by the trigonometric function. In the tripod type universal joint without the above-indicated single-ended modification, as the difference in pitch radii of two adjacent roller elements respectively located between pairs of roller raceways which are parallel to the rotational axis of the pot member is zero, the quantity of non-constant velocity is also zero.

On the other hand, in the tripod type universal joint which has said single-ended modification, the differences in the pitch radii of the portions at which two adjacent roller elements are respectively located between the pairs of roller raceways are increased; for example, one roller element is located at a parallel portion of a pair of roller raceways, and the other roller element is located at a bent portion thereof, so that the quantity of non-constant velocity is increased, in proportion to the increase in the differences.

The configuration of the roller races or pairs of roller raceways of a tripod type constant velocity universal joint greatly affects the general performance thereof. Accordingly, it is important to modify the configuration of the roller races, in order to improve the general performance of the tripod type constant velocity universal joint.

Accordingly, the invention seeks to provide a tripod type constant velocity universal joint having roller races which are so modified that the size and weight thereof are less than in the previously known joint while the constant velocity characteristic remains at least substantially unchanged.

In a tripod type constant velocity universal joint of the kind first set out hereinbefore, the distances between the longitudinal axis of each pair of roller raceways and the rotational axis of the pot member at both ends of the respective pair of roller raceways are shorter than the distance therebetween at a central portion thereof.

If each pair of roller raceways is modified at both end portions thereof in such a manner that the distances between the longitudinal axis of the pair of roller raceways and the rotational axis of the pot member are shorter at both end portions thereof, than the distance therebetween at the central portion thereof i.e., if the pair of roller raceways is subjected to 'double-ended' modification, then the non-constant velocity characteristic due to the single-ended modification is nullified or cancelled, thus improving the constant velocity characteristic, by reducing the differences in the pitch radii of the portions at which two adjacent roller elements are respectively located in the pairs of roller raceways, (for example, one roller element is located at one bent portion of the pair of roller raceways, and the other roller element is located at the other bent portion thereof), and by increasing the frequency of fluctuation in respect of the non-constant velocity and the number of times at which the quantities of non-constant velocity are zero. Furthermore both the stroke movements of the roller elements along the roller supporting rods and the stroke movements thereof along the roller races are improved, i.e. shortened, so that the size and weight of the universal joint can be reduced, thus providing a compact universal joint.

The roller raceways are preferably inwardly curved or bent symmetrically with respect to a point of symmetry which is the neutral point in the central portion of the roller race, i.e. the point (or tripod joint centre portion) at which the roller element is in contact with the roller race when the transmission

3

shafts connected by the joint are in a straight line. That is, the roller race is subjected to double-ended symmetrical modification.

The joint as defined in accordance with the invention further allows an increased maximum joint anale and serves to reduce vibration and noise due to whirling motion of the joint (i.e. a motion in which one shaft connected to the joint moves with a substantially elliptical motion around the centre of the joint, with the other shaft being held in a fixed position), by reducing the quantity of whirling motion.

An embodiment of a joint according to the invention will now be described by way of example with reference to the accompanying drawings in whch:

Figure 1 is a diagrammatic perspective view showing the basic structure of a tripod type constant velocity universal joint,

Figures 2 and 3 are explanatory digrams in respect of a tripod type constant velocity universal joint,

Figure 4 is a cross-sectional view of a previously known tripod type constant velocity universal joint,

Figures 5 and 6 are views in longitudinal section of the joint shown in Figure 4,

Figure 7 is a front view of a pot member of the Figure 4 joint,

Figure 8 is an explanatory diagram in respect of the non-constant velocity characteristic of the Figure 4 joint,

Figure 9 is a graphical representation indicating the amount of non-constant velocity of the Figure 4 joint,

Figures 10 to 12 are sectional views of part of a pot member, showing a roller race which is modified according to this invention, in different ways,

Figure 13 is an explanatory diagram in respect of the constant velocity characteristic of a tripod type constant velocity universal joint according to the invention,

Figure 14 is a graphical representation indicating maximum non-constant velocity with respect to a plane cross-angle in the known joint and in the joint of the invention,

Figure 15 is also a graphical representation indicating the quantity of non-constant velocity with respect to phase angle in the known joint and in the joint of the invention,

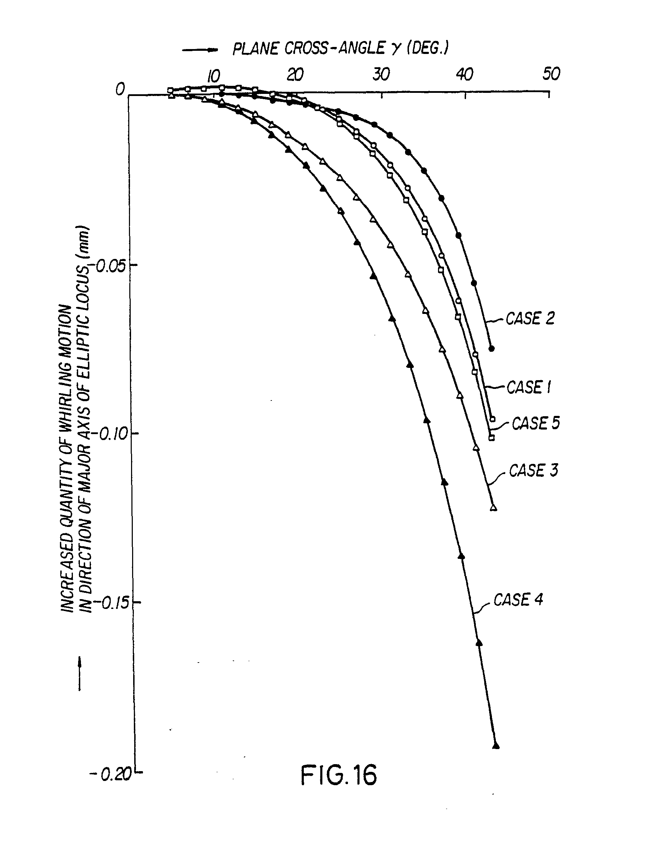

Figures 16 and 17 are graphical representations showing the increase in the quantity of whirling motion in the known joint and in the joint of the invention, and

Figure 18 is a view similar to Figures 10 to 12 showing another form of the modified roller raceways.

Before describing a tripod type constant velocity universal joint according to the invention, the constant velocity characteristic of a tripod type constant velocity universal joint and the non-constant velocity characteristic of a previously known joint with a roller raceway with single-ended modification will be described with reference to Figures 1 to 8. Figure 1 is a diagrammatic exploded perspective view showing the basic structure of a tripod type constant velocity universal joint. The joint comprises a spider member generally indicated at 10. The spider member 10 has three roller supporting pins or rods 11, 12 and 13 which extend radially outwardly from a centre portion, in such a manner that the rods are at angles of 120° to each other. The spider member 10 is connected to one end of a first transmission shaft 14 (one of driving and driven shafts). Roller elements 15, 16 and 17 which each have a spherically curved outer surface are rotatably mounted on the rods 11, 12 and 13 in such a manner that the roller elements are slidable along their respective rods in the axial direction of the rods. The roller elements 15, 16 and 17 are respectively engaged with roller races formed by three pairs of roller raceways as shown at 19, 20 and 21, formed in the cylindrical wall of a substantially cylindrical pot member 18, in such a way that the roller elements can rotatably move in the respective roller races. In the joint with the basic structure described above, the roller races are parallel to the axis of a second transmission shaft 22 (the other of driving and driven shafts) connected to the pot member 18.

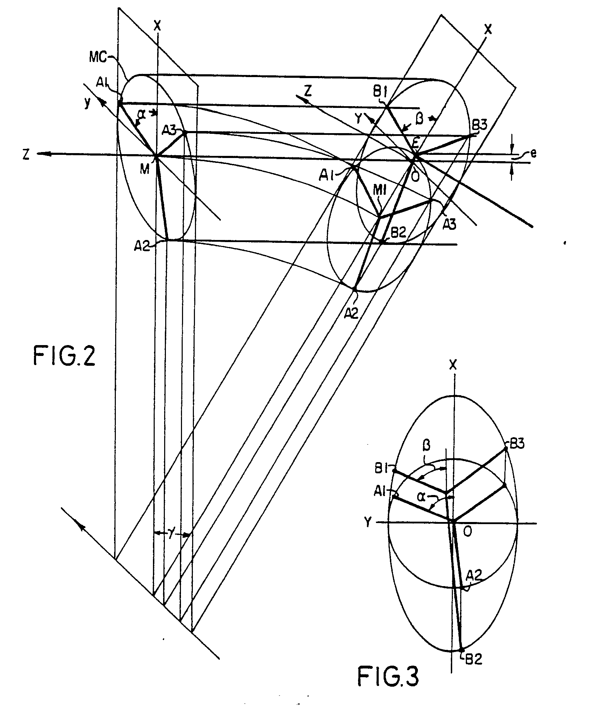

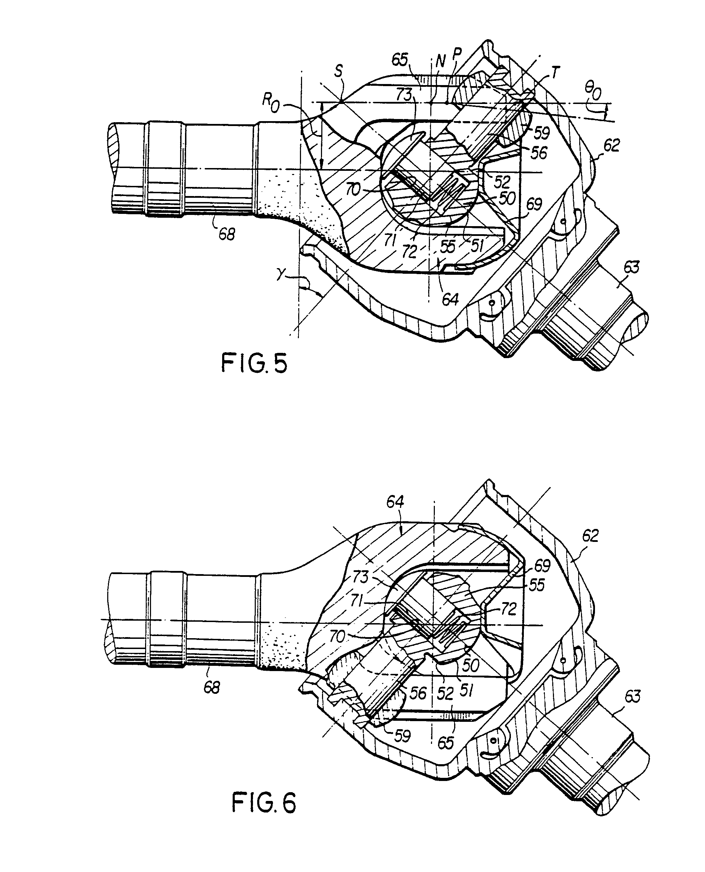

Figure 2 is a diagram showing the constant velocity characteristic of the above-described joint of Figure 1. Figure 2 shows the condition of the pot member 18 and the spider member 10 in which the pot member 18 and the spider member 10 are inclined relative to each other, in planes which are at an angle $\gamma$ to each other, with a rotational phase angle $\alpha$ $(\beta)$. In this connection, when the rotational phase angle $\alpha = \beta$, rotational motion is transmitted at constant velocity between the pot member 18 and the spider member 10.

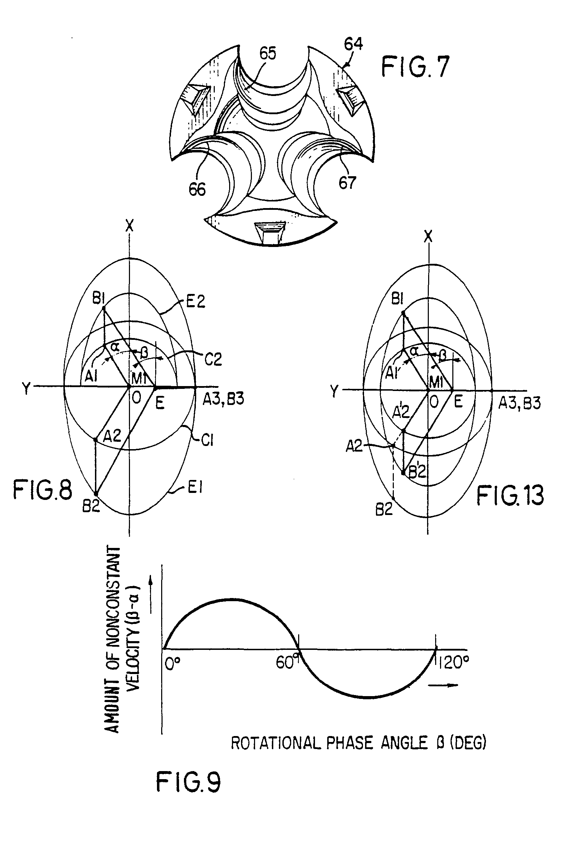

It will be proved that the rotational phase angle $\alpha$ is equal to $\beta$ $(\alpha = \beta)$ in the tripod type constant velocity universal joint having the basic structure of Figure 1. In Figure 2, the centres of the roller races in a plane perpendicular to the axis of the pot member 18 will be designated by $A_1$, $A_2$ and $A_3$, respectively, and a circle whose circumference passes through the three points will be called a 'master circle' (MC) having centre M. Then, the mutual cross angles $\overline{A_1M}$, $\overline{A_2M}$ are each 120°. Furthermore, a length $A_{1-3}M$ will be called a 'pitch radius R'. The centres of the roller elements 15, 16 and 17 are on a slave ellipse (SE) obtained by projecting the master circle MC on to a plane XY, where points $B_1$ to $B_3$ correspond to the points $A_1$ to $A_3$ respectively. Since the points $B_1$ to $B_3$ are on the three roller supporting rods 11 to 13 which are at 120° to each other, the connection point E (which coincides with the axis of the first transmission shaft 14) at which the three roller supporting rods are connected is, in general, displaced a distance of $e$ from the intersection O of the planes XY (coinciding with the axis of the second transmission shaft 22). Figure 3 shows the case where the master circle MC is rotated by angle $\gamma$ around the axis y on the XY plane, and the centre M' of the master circle thus rotated is moved so that it coincides with the intersection O. In Figure 3 the relation between the rotational phase angles $\alpha$ and $\beta$ is as follows, with the co-ordinates (a, b) of the connection point E:

From the relation $(A_{1-3}, B_{1-3})$, the following equations are obtained:

$$\tan \beta = \frac{R \sin \alpha - b}{(R \cos \alpha / \cos \gamma - a)} \qquad (1)$$

$$\tan (\beta + \frac{2}{3} \pi) = \frac{R \sin (\alpha + \frac{2}{3} \pi) - b}{(R \cos (\alpha + \frac{2}{3} \pi) / \cos \gamma - a)} \qquad (2)$$

$$\tan (\beta + \frac{4}{3} \pi) = \frac{R \sin (\alpha + \frac{4}{3} \pi) - b}{(R \cos (\alpha + \frac{4}{3} \pi) / \cos \gamma - a)} \qquad (3)$$

From equations (1) to (3), the following equations are obtained:

$$\alpha = \beta$$

$$a = \tfrac{1}{2} R (1 - \frac{1}{\cos \gamma}) \cos 3\alpha \qquad (4)$$

$$b = \tfrac{1}{2} R (1 - \frac{1}{\cos \gamma}) \sin 3\alpha$$

That is, the rotational phase angle $\alpha$ is equal to the rotational phase angle $\beta$. In this case, the amount of eccentricity $e$ is

$$\sqrt{a^2 + b^2} = \tfrac{1}{2} R (1 - \frac{1}{\cos \gamma})$$

As is apparent from the above description, in the tripod type constant velocity universal joint with the Figure 1 basic structure in which the roller races are parallel to the axis of the pot member 18, the pitch radius R of the master circle, defined by the distance between the rotational axis of said pot member 18 and the longitudinal axis of each pair of roller raceways, is constant in the axial direction. Therefore, the rotational phase angle $\alpha$ is equal to the rotational phase angle $\beta$ irrespective of the plane cross-angle $\gamma$ between the pot member 18 and the spider member 10; that is, the joint has a constant velocity characteristic.

A previously known tripod type constant velocity universal joint is shown in Figures 4 to 7. Figure 4 is a view in cross-section of the joint with the plane cross-angle (joint angle) $\gamma = 0$, Figure 5 is a view in longitudinal section of the joint with the plane cross-angle $\gamma =$ about 40° and the rotational phase angle $\alpha = 0$°, Figure 6 is a view in longitudinal section of the joint with the plane cross-angle $\gamma =$ about 40° and the rotational phase angle $\alpha = 180$°, while Figure 7 is a front view of the pot member. The spider member 50 has a central part 55 having a spherical surface 51, three flat faces 52, 53 and 54, and three roller supporting pins or rods 56, 57 and 58 which respectively extend radially from the three faces 52 to 54. Roller elements 59, 60 and 61 each having a spherically curved outer surface are rotatably supported on the rods 56, 57 and 58 in such a manner that they can freely move along the respective rods. The ends of the rods 56, 57 and 58 of the spider member 50 are fixedly secured to the inner wall of a generally bell-shaped housing 62. A tripod shaft 63 is integrally formed with the housing 62 in such a manner that it extends from the housing along the axial line passing through the centre of the central part 55.

The roller elements 59, 60 and 61 are so designed that they are movable along the rods 56 to 58 between the faces 52 to 54 and the inner wall of the housing 62, and are movably engaged between respective pairs of roller raceways as at 65, 66 and 67.

The pot member 64 may be referred to as a 'tulip member' because of its configuration, and a pot shaft 68 is extended from the bottom of the main pot member 64. The pot part receives the central part 55 of the spider member 50. The end portion of the pot member 64 is provided with a three-leg resilient member 69 which is formed so as to fit over the three portions of the pot member which are formed between the above-described roller races. The member 69 has a central portion which is slidably in contact with the surface 51 of the spider member 50. The central part 55 of the spider member 50 has a hole 70 in its side opposite to the surface 51. A depression pin 71 is fitted in the hole 70. A compression spring 72 in the hole 70 causes the spherical head 73 of the depression pin 71 to bear against the internal bottom surface of the pot part of the pot member and the surface 51 to bear against the member 69.

The roller races 65, 66 and 67 are formed in the cylindrical portion of the pot part of the pot member 64 in such a manner that, as shown in Figure 5, they extend parallel to the axis of the pot member 64 to a predetermined point P at the side of the neutral point N which is remote from the base point S, and are slightly inwardly bent over the distance between the predetermined point P and the free end point T. This bend in the end region of the roller races, as just described above, is referred to as 'single-ended modification' of the roller races.

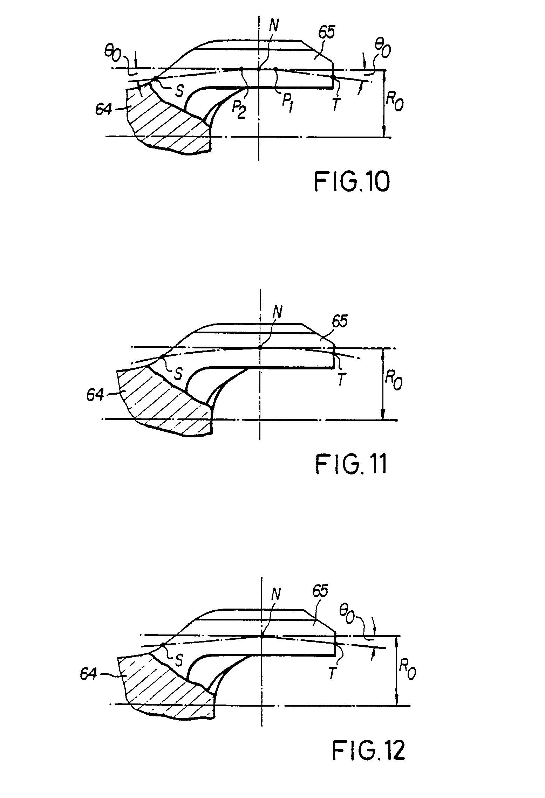

When the roller races are subjected to this single-ended modification, the pitch diameter of the master circle thereof is not constant; that is, it decreases at the end of the roller races. Figure 8 is an explanatory diagram similar to that of Figure 3. In Figure 8, the rotational phase angle $\alpha$ of the pot member is 30°; and reference $C_1$ designates a master circle in the parallel part of the roller races, the master circle $C_1$ having a maximum pitch radius $R_0$ (defined by the distance between the rotational axis of said pot member and the longitudinal axis of each pair of roller raceways); $C_2$ denotes a master circle at the free end part of the roller races, the master circle $C_2$ being smaller in diameter than the master circle $C_1$; $E_1$ denotes the slave ellipse of the master circle $C_1$; and $E_2$ denotes the slave ellipse of the master circle $C_2$. Figure 8 shows a condition in which, of the three roller elements, two are engaged with the parallel part of the roller races and the remaining one is engaged with the bent part of the roller races; that is, the roller centres $A_2$ and $A_3$ are in the parallel part of the roller races, and the roller centre $A_1$ is in the bent part. In this case, the rotational phase angle $\alpha$ of the pot member is not equal to the angle $\beta$ of the spider member, and therefore the quantity of non-constant velocity $(\beta - \alpha)$ increases with increasing plane cross-angle $\gamma$; that is, the constant velocity characteristic is not maintained. The quantity of non-constant velocity fluctuates in a third order pattern of revolution, as shown in Figure 9.

Intensive experimental study and mathematical analysis has been carried out to reduce the quantity of non-constant velocity in joints in which the roller races are subjected to single-ended modification, and it was found that satisfactory results can be obtained by symmetrically subjecting both ends of the roller races to modification, with the neutral point as its point of symmetry.

Figures 10 to 12 are diagrammatic views of part of a pot member, showing a roller race which is formed by a pair of raceways and which is subjected to symmetrical double-ended modification. In one example of the pot member, shown in Figure 10, the pair of roller raceways is parallel to the axial line of the pot member 64 between points $P_1$ and $P_2$ which are equally spaced from the neutral point N of the pair of roller raceways in opposite directions. The pair of roller raceways is inwardly bent or curved at the points $P_1$ and $P_2$ in such a manner that the distance between the roller raceways and the axial line of the pot member 64 is shorter towards the free end point T and the base point S, than in the parallel part of the roller raceways.

In a second example of the pot member, shown in Figure 11, the roller raceways follow the form of an arc which has its centre on a line which is orthogonal with respect to the axial line of the pot member and which passes through the neutral point N. Accordingly, in the embodiment of Figure 11, the distance between the roller raceways and the rotational axis of the pot member 64 is also longest at the neutral point N and slightly shorter at the end point T and the base point S.

In a third example, shown in Figure 12, the roller raceways are inwardly bent or curved so that the distance between the roller raceways and the axis of the pot member is longest at the neutral point N and is gradually shortened towards the end point T and the base point S, from the neutral point N.

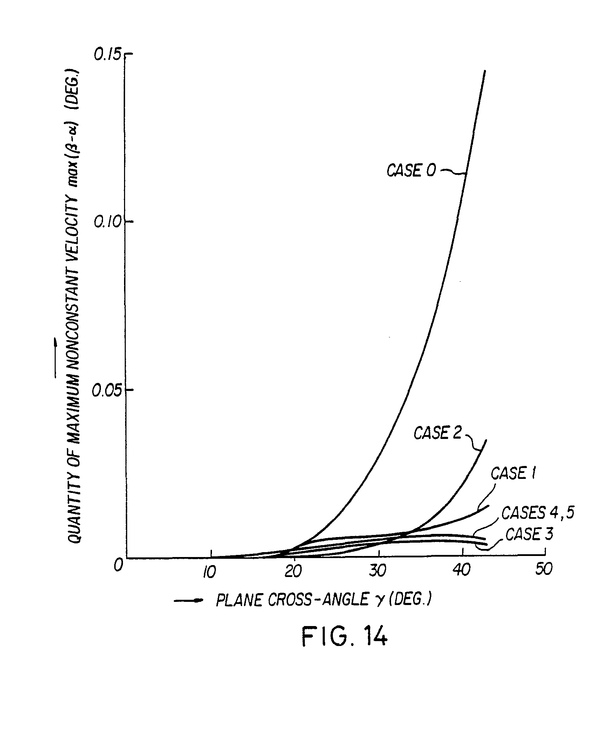

With regard to the joint having the roller raceways with double-ended modification as described above, its explanatory diagram similar to that in Figure 8 is shown in Figure 13. In the case of the roller raceways with single-ended modification, the roller centres are at points $A_1$, $A_2$ and $A_3$ on the master circle and at points $B_1$, $B_2$ and $B_3$ on the slave ellipse. On the other hand, when the roller raceways have the above-described double-ended modification, the roller centres are at points $A_1$, $A'_2$ and $A_3$ of the master circle of the roller races, and at the points $B_1$, $B'_2$ and $B_3$ of the slave ellipse, as shown in Figure 13. As one of the roller centres is shifted from point $A_2$ to point $A'_2$ and from point $B_2$ to point $B'_2$, points $A_1$ and $A'_2$ and the points $B_1$ and $B'_2$ are symmetrical with respect to the Y axis. Accordingly, the rotational phase angle $\alpha$ of the pot member is nearly equal to the angle $\beta$ of the spider member so that quantity of nonconstant velocity is improved to an allowable and minimum amount; that is, the improved constant velocity characteristic is obtained. In general, as is clear from the above-described examples, the double-ended symmetrical modification of a pair of roller raceways can cancel the non-constant velocity characteristic which is due to the single-ended modification by reducing the differences in the pitch radii of the portions at which two adjacent roller elements are located in the respective pairs of roller raceways (for example, one roller element being located in one bent portion of a pair of roller raceways, and the other roller element being located in the other bent portion thereof), and by increasing the frequency of fluctuation in respect of non-constant velocity and the number of times at which the quantities of non-constant velocity becomes zero, thereby greatly to reduce the quantity of non-constant velocity. The quantity of non-constant velocity of the joint in which the roller races are subjected to double-ended symmetrical modification fluctuates in the sixth-order pattern of revolution.

In order to investigate the relation between the pattern of modification of the roller races and the general performance of the joint, six tripod type constant velocity universal joints were produced, with roller races which each have differently modified raceways, and the differences in quantity of non-constant velocity, quantity of whirling motion and length of the stroke movements of the rollers due to differences in the forms of raceway modification, were compared. The various data on the joints thus prepared are set out in Table 1.

The data shown in Case 0 of Table 1 is for a previously known joint having roller races with single-ended modification. Case 1 corresponds to the example shown in Figure 10, Case 2 corresponds to the example shown in Figure 11, while Cases 3 to 5 correspond to the example shown in Figure 12.

TABLE 1

| Case | Modification pattern | Data | Remarks |
|------|---------------------|------|---------|
| 0 | | $R_{O'} = 19.9$ mm<br>$\overline{NP} = 5.24$ mm<br>$\theta_0 = 6.2°$ | Conventional type, with single-ended modification |
| 1 | | $R_0 = 19.9$ mm<br>$\overline{NP}_1, \overline{NP}_2 = 5.24$ mm<br>$\theta_0 = 6.2°$ | The modification of Case 0 is symmetrical with respect to the neutral point |
| 2 | | $R_0 = 19.9$ mm<br>$r = 121.23$ mm | Three points S, N and T in Case 1 are connected by one arc |
| 3 | | $R_0 = 19.9$ mm<br>$\theta_0 = 4.645°$ | Three points S, N and T in Case 1 are connected by straight lines |
| 4 | | $R_0 = 19.9$ mm<br>$\theta_0 = 6.2°$ | Another form of Case 3 |
| 5 | | $R_0 = 20.436$<br>$\theta_0 = 6.2°$ | A further form of Case 3 |

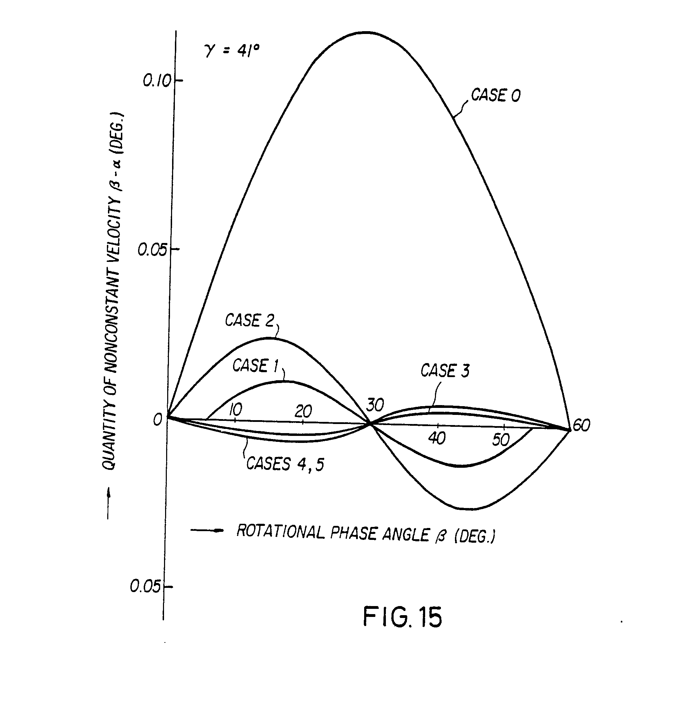

Figure 14 is a graphical representation indicating quantities of maximum non-constant velocity, in relation to angles $\gamma$ respectively according to the various Cases. Figure 15 is also a graphical representation indicating quantities of non-constant velocity, in relation to rotational phase angles $\beta$ of the spider member, with the angle $\gamma = 41°$, separately according to the various Cases.

As is apparent from the curves in Figures 14 and 15, the conditions of a modification pattern which is a preferred modification with respect to the constant velocity characteristic are as follows:

(1) It is preferable for the modification pattern to be symmetrical with respect to the neutral point (the centre of the joint) of the roller race (comparison of Case 0 with Cases 1 to 5).

(2) It is preferable for the modification to have no part which is parallel to the rotational axis of the pot member (comparison of Case 1 with Case 4), because in Case 1, the pitch radius $R_o$ of the parallel part having a predetermined length is at a maximum and the differences in the pitch radii of the portions at which two adjacent roller elements are respectively located in the pairs of roller raceways are increased in comparison with Case 4.

(3) It is preferable for the modification pattern to be in the form of a straight line instead of an arc (comparison of Case 2 with Cases 1, 3, 4 and 5), because in Case 2 with arcuate roller raceways, tangential directions of the roller raceways at both end portions, with respect to the rotational axis of the pot member, are large, so that the differences in the pitch radii of the portions at which two adjacent roller elements are respectively located in the pairs of roller raceways are increased in comparison with Cases 1, 3, 4 and 5.

(4) It is most desirable for the magnitude of the modification, i.e., the amount $\delta$ by which the pair of roller raceways approach the rotational axis of the pot member, to become as small as possible, because in Case 3, the $\delta$ is the smallest of all Cases, so that the differences in the pitch radii of the portions at which two adjacent roller elements are respectively located in the pairs of roller raceways are reduced to the greatest extent.

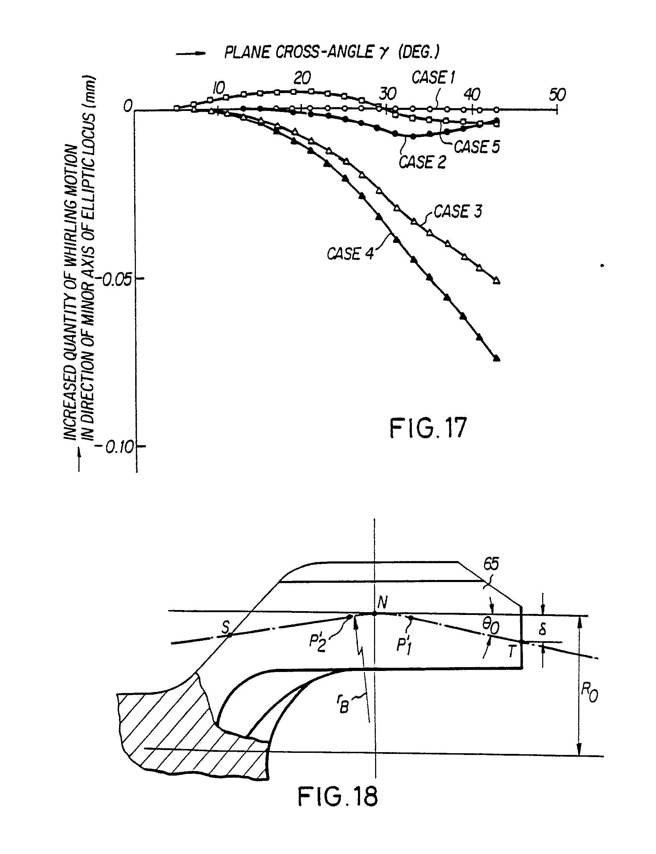

Furthermore, as shown in Figure 18, each pair of roller raceways extends in part along an arcuate line which has a predetermined large radius $r_B$ of curvature and length and which passes through the neutral point N of the pair of roller raceways, and each pair also extends in part along straight lines which are at a predetermined angle to the rotational axis of the pot member and which connect points $P_1'$, $P_2'$ spaced from the neutral point N and the two ends S, T of the pair of roller raceways, so that the amount or distance $\delta$ is smaller than that in case 3 and the differences in the pitch radii of the portions at which two adjacent roller elements are respectively located in the pairs of roller raceways are reduced more than in Case 3.

When one of the shafts of a tripod type constant velocity universal joint, for instance the pot shaft, is held in a fixed position, then the other shaft, or tripod shaft, describes a substantially elliptic motion (referred to as whirling motion) around the joint centre. In the previously known constant velocity joint (corresponding to Case 0 in Table 1), the tripod shaft is whirled three times in every revolution of the joint, and the whirling motion, or substantially elliptic motion, defines a substantially elliptic locus about 3.15 mm at its major axis and 2.45 mm at its minor axis. On the other hand, with the double-ended modification, with the angle $\gamma = 41°$, the quantity of whirling motion is reduced by about 0.055—0.165 mm in the direction of the major axis of the elliptic locus and by about 0—0.75 mm in the direction of the minor axis. As such whirling motion generates vibration and noise, such vibration and noise can be reduced by reducing the whirling movement. Furthermore, if the whirling motion is reduced, then the inside diameter of the joint housing can be correspondingly reduced, resulting in a compact joint.

When a tripod type constant velocity universal joint is operated under such conditions as to form a plane cross-angle $\gamma$, then the roller elements are moved along the roller supporting rods with rotation of the joint. The maximum and minimum values of the roller stroke movements and the stroke lengths in Cases 0 to 5 of Table 1 in this connection were obtained and are set out in Table 2 below:

O 009 224

TABLE 2

| Case | Roller stroke Maximum value Smax (mm) | Minimum value Smin (mm) | Stroke (Smax-Smin) (mm) |
|---|---|---|---|
| 0 | 29.58 | 16.75 | 12.83 |
| 1 | 27.71 | 16.83 | 10.88 |
| 2 | 27.752 | 16.804 | 10.948 |
| 3 | 27.570 | 16.836 | 10.734 |
| 4 | 26.946 | 16.883 | 10.063 |
| 5 | 27.672 | 17.338 | 10.334 |

The term 'maximum value' means the distance between the roller centre and the base of the roller supporting rod when the roller element is closest to the top or free end of the roller supporting rod; the term 'minimum value' means the distance between the roller centre and the base of the roller supporting rod when the roller element is closest to the base of the roller supporting rod; and the term 'stroke length' means the value obtained by subtracting the minimum value from the maximum value.

Comparison in roller stroke length between the known universal joint (Case 0) and the universal joint of the invention (Cases 1 to 5) gives the following results: The roller stroke length of each of the universal joints of the invention is smaller than that of the known joint. Especially in Case 4, the stroke length of the universal joint of the invention is smaller by about 20% than that of the known joint. If the maximum value of the roller stroke is reduced, the inside diameter of the housing can be reduced, while if the minimum value of the roller stroke is increased, the positions of the end faces (52 to 54 in Figure 4) of the central part 52 of the spider member 50 can be correspondingly shifted outwardly, whereby the area of the spherical surface 51 of the spider member can be increased, with the result that the member 69 scarcely moves away from the spherical surface 51, and the maximum operating angle of the joint can be increased.

When the joint is operated under such conditions as to form a plane angle $\gamma$, the roller elements are rotatably moved along the roller raceways by rotation of the joint. In this connection, the lengths of the stroke movement of the roller elements were obtained respectively in Cases 0 to 5 in Table 1 and are set out in Table 3 below:

TABLE 3

| Case | Movement Maximum value (mm) | Minimum value (mm) | Length of movement (mm) |
|---|---|---|---|
| 0 | 18.192 | −19.406 | 37.598 |
| 1 | 18.184 | −18.184 | 36.368 |
| 2 | 18.207 | −18.207 | 36.414 |
| 3 | 18.088 | −18.088 | 36.176 |
| 4 | 17.678 | −17.678 | 35.356 |
| 5 | 18.154 | −18.154 | 36.308 |

In Table 3, the maximum values and the minimum values are set out in such a manner that, with the neutral point of the roller raceways as zero, they are positive values and negative values respectively when the roller elements are moved from the neutral point toward the top or free end of the raceways (point T) and when moved towards the base end (point S).

Comparison in the length of movement of the roller elements between the known joint (Case 0) and the universal joints of the invention (Cases 1 to 5) gives the following result: The length of the movement of any one of the universal joints of Cases 1 to 5 is smaller than that of the known joint of

Case 0. This will reduce the number of occasions on which the roller elements move away from the respective roller raceways, and furthermore suggests the possibility that the joint can be so designed as to be small in size and light in weight. In addition, the above-described effect means that, when the joint is of a predetermined size the maximum operating angle of the joint may be increased.

Various modifications may be made in the above-described joints according to the invention, without thereby departing from the scope of the invention.

## Claims

1. A tripod type constant velocity universal joint comprising a spider member (50) for connection to a driving shaft or a driven shaft, having three roller-supporting rods (56, 57, 58) extending radially from a centre portion thereof with angles of 120 degree therebetween, three roller elements (59, 60, 61) each rotatably supported on respective ones of the roller supporting rods (56, 57, 58) and slidable therealong, and a pot member (50) for connection to the other of said driving and driven shafts, defining three pairs of roller raceways (65, 66, 67) receiving each of the three roller elements (59, 60, 61) between the respective pairs of roller raceways (65, 66, 67), characterised in that the distances between the longitudinal axis of each pair of roller raceways (65, 66, 67) and the rotational axis of the pot member (50) at both ends (S, T) of the respective pair of roller raceways are shorter than the distance therebetween at a central portion (N) thereof.

2. A joint according to claim 1, characterised in that, each pair of roller raceways (65, 66, 67) is symmetrical with respect to the central portion (N) of the pair of roller raceways (65, 66, 67).

3. A joint according to claim 2, characterised in that each pair of roller raceways (65, 66, 67) progressively approaches the rotational axis of the pot member (64), starting from the central portion (N) and moving along the raceways (65, 66, 67) towards the two ends (S, T) thereof.

4. A joint according to claim 2 characterised in that each pair of roller raceways (65, 66, 67) has a portion which is parallel to the rotational axis of the pot member (64) between points $(P_1, P_2)$ which are equally spaced from the central portion (N) on respective sides thereof in the longitudinal direction of the raceways, and each pair of roller raceways (65, 66, 67) progressively approaches the rotational axis of the pot member (64) starting from the spaced points $(P_1, P_2)$ and moving towards the two ends of the pair of roller raceways (65, 66, 67).

5. A joint according to claim 3 characterised in that portions of each pair of roller raceways (65, 66, 67) extend along respective straight lines which are disposed at predetermined angles $(\theta_o)$ to the rotational axis of the pot member (64) and which interconnect the central portion (N) and the respective ends (S, T) of the pair of roller raceways (65, 66, 67).

6. A joint according to claim 3 characterised in that each pair of roller raceways (65, 66, 67) extends along an arcuate line having a predetermined radius (r) of curvature and passing through the central portion (N) and both ends (S, T) of the pair of roller raceways (65, 66, 67).

7. A joint according to claim 4 characterised in that, each pair of roller raceways (65, 66, 67) extends along respective straight lines which are disposed at predetermined angles $(\theta_o)$ to the rotational axis of the pot member (64) and which interconnect the spaced points $(P_1, P_2)$ and the respective ends (S, T) of the pair of roller raceways, in its portions in which each pair of raceways (65, 66, 67) progressively approaches the rotational axis of the pot member (64).

8. A joint according to claim 2 characterised in that a portion of each pair of roller raceways (65, 66, 67) extends along a respective arcuate line having a predetermined radius (r) of curvature and length and passing through the central portion (N) of the pair of roller raceways (65, 66, 67) and further portions of each pair of roller raceways extend along respective straight lines which are disposed at a predetermined angle $(\theta_o)$ to the rotational axis of the pot member (64) and which interconnects points $(P_1, P_2)$ and respective ends (S, T) of said pair of roller raceways, said points $(P_1, P_2)$ being equally spaced from the central portion (N) on respective sides thereof in the longitudinal direction of the raceways.

9. A joint according to claim 5, claim 7 or claim 8 characterised in that angle $(\theta_o)$ is 4.645°.

10. A joint according to claim 5, claim 7 or claim 8 characterised in that the angle $(\theta_o)$ is 6.2°.

11. A joint according to claim 6 or claim 8 characterised in that said radius (r) of curvature of the pair of roller raceways (65, 66, 67) is 121.23 mm.

12. A joint according to any one of claims 9 to 12, characterised in that the maximum pitch radius $(R_o)$ defined by the distance between the rotational axis of the pot member (64) and the longitudinal axis of each pair of roller raceways (65, 66, 67) is 19.9 mm.

13. A joint according to claim 10 characterised in that the maximum pitch radius $(R_o)$ defined by the distance between the rotational axis of the pot member (64) and the longitudinal axis of each pair of roller raceways (65, 66, 67) is 20.436 mm.

**0 009 224**

### Revendications

1. Un joint universel homocinétique de type tripode comprenant un croisillon trépied (50) destiné à être accouplé à un arbre menant ou à un arbre mené, comportant trois broches de support de galet (56, 57, 58) qui s'étendent radialement à partir d'une partie centrale du croisillon avec des angles de 120 degrés entre elles, trois galets (59, 60, 61) chacun d'eux étant supporté de façon tournante sur l'une respective des broches de support de galet (56, 57, 58) et pouvant glisser le long de la broche correspondante, et une tulipe (64) destinée à être accouplée à l'autre arbre parmi l'arbre menant et l'arbre mené, définissant trois paires de chemins de circulation de galet (65, 66, 67) et recevant chacun des trois galets (59, 60, 61) entre les paires respectives de chemins de circulation de galet (65, 66, 67), caractérisé en ce que les distances entre l'axe longitudinal de chaque paire de chemins de circulation de galet (65, 66, 67) et l'axe de rotation de la tulipe (64) aux deux extrémités (S, T) de la paire respective de chemins de circulation de galet sont plus courtes que la distance entre eux dans une partie centrale (N) des paires respectives de chemins de circulation de galet.

2. Un joint selon la revendication 1, caractérisé en ce que chaque paire de chemins de circulation de galet (65, 66, 67) est symétrique par rapport à la partie centrale (N) de la paire de chemins de circulation de galet (65, 66, 67).

3. Un joint selon la revendication 2, caractérisé en ce que chaque paire de chemins de circulation de galet (65, 66, 67) s'approche progressivement de l'axe de rotation de la tulipe (64), lorsqu'on part de la partie centrale (N) et qu'on se déplace le long des chemins de circulation (65, 66, 67) vers leurs deux extrémités (S, T).

4. Un joint selon la revendication 2, caractérisé en ce que chaque paire de chemins de circulation de galet (65, 66, 67) comporte une partie qui est parallèle à l'axe de rotation de la tulipe (64) entre des points ($P_1$, $P_2$) qui sont également espacés de la partie centrale (N) et situés de part et d'autre de cette dernière dans la direction longitudinale des chemins de circulation, et chaque paire de chemins de circulation de galet (65, 66, 67) s'approche progressivement de l'axe de rotation de la tulipe (64) lorsqu'on part des points espacés ($P_1$, $P_2$) et qu'on se déplace vers les deux extrémités de la paire de chemins de circulation de galet (65, 66, 67).

5. Un joint selon la revendication 3, caractérisé en ce que des parties de chaque paire de chemins de circulation de galet (65, 66, 67) s'étendent le long de lignes droites respectives qui font des angles prédéterminés ($\theta_0$) par rapport à l'axe de rotation de la tulipe (64) et qui relient la partie centrale (N) et les extrémités respectives (S, T) de la paire de chemins de circulation de galet (65, 66, 67).

6. Un joint selon la revendication 3, caractérisé en ce que chaque paire de chemins de circulation de galet (65, 66, 67) s'étend le long d'une ligne courbe ayant un rayon de courbure (r) prédéterminé et passant par la partie centrale (N) et les deux extrémités (S, T) de la paire de chemins de circulation de galet (65, 66, 67).

7. Un joint selon la revendication 4, caractérisé en ce que chaque paire de chemins de circulation de galet (65, 66, 67) s'étend le long de lignes droites respectives qui font des angles prédéterminés ($\theta_0$) par rapport à l'axe de rotation de la tulipe (64) et qui relient les points espacés ($P_1$, $P_2$) et les extrémités respectives (S, T) de la paire de chemins de circulation de galet, dans les parties de chaque paire de chemins de circulation de galet (65, 66, 67) dans lesquelles celle-ci s'approche progressivement de l'axe de rotation de la tulipe (64).

8. Un joint selon la revendication 2, caractérisé en ce qu'une partie de chaque paire de chemins de circulation de galet (65, 66, 67) s'étend le long d'une ligne courbe respective ayant un rayon de courbure (r) et une longueur prédéterminés et passant par la partie centrale (N) de la paire de chemins de circulation de galet (65, 66, 67) et des parties supplémentaires de chaque paire de chemins de circulation de galet s'étendent le long de lignes droites respectives qui font un angle prédéterminé ($\theta_0$) par rapport à l'axe de rotation de la tulipe (64) et qui relient les points espacés ($P_1$, $P_2$) et les extrémités respectives (S, T) de la paire de chemins de circulation de galets, lesdits points ($P_1$, $P_2$) étant situés à des distances égales de la partie centrale (N) et de part et d'autre de celle-ci, dans la direction longitudinale des chemins de circulation.

9. Un joint selon la revendication 5, la revendication 7 ou la revendication 8, caractérisé en ce que l'angle ($\theta_0$) est de 4,645°.

10. Un joint selon la revendication 5, la revendication 7 ou la revendication 8, caractérisé en ce que l'angle ($\theta_0$) est de 6,2°.

11. Un joint selon la revendication 6 ou la revendication 8, caractérisé en ce que le rayon de courbure r de la paire de chemins de circulation de galet (65, 66, 67) est de 121,23 mm.

12. Un joint selon l'une quelconque des revendications 9 à 12, caractérisé en ce que le rayon primitif maximal ($R_0$) défini par la distance entre l'axe de rotation de la tulipe (64) et l'axe longitudinal de chaque paire de chemins de circulation de galet (65, 66, 67) est de 19,9 mm.

13. Un joint selon la revendication 10, caractérisé en ce que le rayon primitif maximal ($R_0$) défini par la distance entre l'axe de rotation de la tulipe (64) et l'axe longitudinal de chaque paire de chemins de circulation de galet (65, 66, 67) est de 20,436 mm.

**Patentansprüche**

1. Gleichlauf-Universalgelenk, umfassend ein mit einer treibenden oder einer getriebenen Welle zu verbindendes Gelenkkreuz (50) mit drei Zapfen (56, 57, 58), die radial mit Winkeln von 120° zwischen sich von einem Mittelteil des Gelenkreuzes abstehen, drei Rollenelemente (59, 60, 61), von denen jedes auf einem jeweiligen Zapfen (56, 57, 58) drehbar und längs ihm gleitbar gehalten ist, und einem Topf (64), der mit der anderen der treibenden und der getriebenen Welle zu verbinden ist und drei Paare von Rollbahnen (65, 66, 67) bildet, wobei jedes der drei Rollenelemente (59, 60, 61) zwischen den Rollbahnen eines jeweiligen Paares von Rollbahnen (65, 66, 67) aufgenommen ist, dadurch gekennzeichnet, daß die Abstände zwischen der Längsachse jedes Paares von Rollbahnen (65, 66, 67) und der Drehachse des Topfes (64) an beiden Enden (S, T) des jeweiligen Paares von Rollbahnen kürzer als dieser Abstand an einem Mittelteil (N) der Rollbahnen ist.

2. Gelenk nach Anspruch 1, dadurch gekennzeichnet, daß jedes Paar von Rollbahnen (65, 66, 67) symmetrisch in bezug auf den Mittelteil (N) des Paares von Rollbahnen (65, 66, 67) ist.

3. Gelenk nach Anspruch 2, dadurch gekennzeichnet, daß jedes Paar von Rollbahnen (65, 66, 67) sich zunehmend des Drehachse des Topfes (64) nähert, und zwar ausgehend vom Mittelteil (N) längs der Rollbahnen (65, 66, 67) zu deren beiden Endes (S, T).

4. Gelenk nach Anspruch 2, dadurch gekennzeichnet, daß jedes Paar von Rollbahnen (65, 66, 67) einen zur Drehachse des Topfes (64) parallelen Teil zwischen Punkten $(P_1, P_2)$ aufweist, welche in gleichem Abstand vom Mittelteil (N) auf jeweiligen Seiten von diesem in Längsrichtung der Rollbahnen liegen, und daß jedes Paar von Rollbahnen (65, 66, 67) sich der Drehachse des Topfes (64) zunehmend annähert, und zwar ausgehend von den beabstandeten Punkten $(P_1, P_2)$ in Richtung auf die beiden Enden des Paares von Rollbahnen (65, 66, 67).

5. Gelenk nach Anspruch 3, dadurch gekennzeichnet, daß Teile jedes Paares von Rollbahnen (65, 66, 67) sich längs jeweiligen geraden Linien erstrecken, die unter bestimmten Winkeln $(\theta_0)$ zur Drehachse des Topfes (64) liegen und den Mittelteil (N) und die jeweiligen Enden (S, T) des Paares von Rollbahnen (65, 66, 67) miteinander verbindet.

6. Gelenk nach Anspruch 3, dadurch gekennzeichnet, daß sich jedes Paar von Rollbahnen (65, 66, 67) längs einer gekrümmten Linie erstreckt, die einen vorgegebenen Krümmungsradius (r) besitzt und durch den Mittelteil (N) und beide Enden (S, T) des Paares von Rollbahnen (65, 66, 67) verläuft.

7. Gelenk nach Anspruch 4, dadurch gekennzeichnet, daß jedes Paar von Rollbahnen (65, 66, 67) sich in den Teilen, in denen es sich zunehmend der Drehachse des Topfes (64) annähert, längs jeweiligen geraden Linien erstreckt, die unter vorbestimmten Winkeln $(\theta_0)$ zur Drehachse des Topfes (64) liegen und die beabstandeten Punkte $(P_1, P_2)$ und die jeweiligen Endes (S, T) des Paares von Rollbahnen miteinander verbinden.

8. Gelenk nach Anspruch 2, dadurch gekennzeichnet, daß sich ein Teil jedes Paares von Rollbahnen (65, 66, 67) längs einer jeweiligen gekrümmten Linie erstreckt, deren Krümmungsradius (r) und Länge vorgegeben sind und die durch den Mittelteil (N) des Paares von Rollbahnen (65, 66, 67) geht, und daß sich weitere Teile jedes Paares von Rollbahnen jängs jeweiligen geraden Linien erstrecken, die unter einem vorgegebenen Winkel $(\theta_0)$ zur Drehachse des Topfes (64) liegen und Punkte $(P_1, P_2)$ und jeweilige Enden (S, T) des Paares von Rollbahnen miteinander verbinden, wobei die Punkte $(P_1, P_2)$ in Längsrichtung der Rollbahnen auf jeweiligen Seiten des Mittelteils (N) gleichen Abstand von diesem aufweisen.

9. Gelenk nach Anspruch 5, 7 oder 8, dadurch gekennzeichnet, daß der Winkel $(\theta_0)$ 4,645° beträgt.

10. Gelenk nach Anspruch 5, 7 oder 8, dadurch gekennzeichnet, daß der Winkel $(\theta_0)$ 6,2° beträgt.

11. Gelenk nach Anspruch 6 oder 8, dadurch gekennzeichnet, daß der Krümmungsradius des Paares von Rollbahnen (65, 66, 67) 121,23 mm beträgt.

12. Gelenk nach einem der Ansprüche 9 bis 12, dadurch gekennzeichnet, daß der durch den Abstand zwischen der Drehachse des Topfes (64) und der Längsachse jedes Paares von Rollbahnen (65, 66, 67) definierte maximale Rollradius $(R_0)$ 19,9 mm beträgt.

13. Gelenk nach Anspruch 10, dadurch gekennzeichnet, daß der durch den Abstand zwischen der Rotationsachse des Topfes (64) und der Längsachse jedes Paares von Rollbahnen (65, 66, 67) definierte maximale Rollradius $(R_0)$ 20,436 mm beträgt.

FIG.1

FIG.4

FIG.2

FIG.3

FIG. 5

FIG. 6

FIG. 7

FIG. 8

FIG. 13

FIG. 9

AMOUNT OF NONCONSTANT VELOCITY ($\beta - \alpha$)

ROTATIONAL PHASE ANGLE $\beta$ (DEG)

$0°$  $60°$  $120°$

FIG.10

FIG.11

FIG.12

FIG. 14

FIG. 15

FIG.16

FIG.17

FIG.18